# EUROPÄISCHE PATENTSCHRIFT

(11) **EP 4 469 759 B1**
(45) Veröffentlichungstag und Bekanntmachung des Hinweises auf die Patenterteilung: **02.09.2026**
(21) Anmeldenummer: 23701293.5
(22) Anmeldetag: 17.01.2023
(51) Int. Cl.: G01F 23/296, G01S 15/88

(54) **VERFAHREN ZUM HERSTELLEN EINES ULTRASCHALLSENSORS UND ULTRASCHALLSENSOR**
PROCESS FOR PRODUCING AN ULTRASOUND SENSOR AND ULTRASOUND SENSOR
PROCÉDÉ DE FABRICATION D'UN CAPTEUR À ULTRASONS

(30) Priorität: 27.01.2022 DE 102022200918
(43) Veröffentlichungstag der Anmeldung: 04.12.2024
(73) Patentinhaber: Schaeffler Technologies AG & Co. KG, 91074 Herzogenaurach (DE)
(72) Erfinder: PFEIFFER, Karl-Friedrich, 80687 München (DE); GROTEVENT, Henning, 80687 München (DE)
(74) Vertreter: Schaeffler Technologies
(86) Internationale Anmeldenummer: PCT/EP2023/051038
(87) Internationale Veröffentlichungsnummer: WO 2023/143969

(56) Entgegenhaltungen:
- DE-A1- 102017 221 261
- DE-B3- 102016 205 240

## Beschreibung

Die Erfindung betrifft ein Verfahren zum Herstellen eines Ultraschallsensors und einen Ultraschallsensor, insbesondere ein Verfahren zum Herstellen eines Ultraschallsensors zum Erfassen des Füllstands und/oder der Qualität eines Fluids, wie beispielsweise eines Motoröls.

Ultraschallsensoren werden beispielsweise zum Erfassen des Füllstands und/oder der Qualität eines Öls innerhalb einer Ölwanne einer Brennkraftmaschine verwendet. Dabei werden zur Erfassung des Füllstands vom Ultraschallsensor Ultraschallwellen ausgegeben und auf Grundlage der an der Öloberfläche reflektierten Schallwellen und deren Laufzeit der Füllstand ermittelt. Hierzu weist der Ultraschallsensor einen Ultraschallsender und -empfänger in Form eines piezoelektrischen Elements auf. Mit Ultraschallsensoren sind aber auch die Füllstände und/oder Qualitäten anderer Fluide erfassbar, beispielsweise von wässrigen Harnstofflösungen, die zum Einspritzen in den Abgastrakt von Brennkraftmaschinen ausgebildet sind, Wasser, Wischwasser zum Wischen von Fahrzeugscheiben, etc.

Die mit einem solchen Ultraschallsensor minimal messbare Strecke (auch Blockdistanz genannt) wird dadurch bestimmt, wie schnell das als Sender und Empfänger arbeitende piezoelektrische Element nach Aussenden des Messpulses wieder zur Ruhe gekommen ist, so dass das Echosignal mit hoher Qualität detektiert werden kann. Diese Ausklingzeit (oder Abklingzeit) wird von zwei Hauptfaktoren beeinflusst, nämlich zum einen von der akustischen Kopplung an das Messmedium und zum anderen von der mechanischen Dämpfung des piezoelektrischen Elements. Eine gute Kopplung an das Messmedium verkürzt die Ausklingzeit dadurch, dass ein Großteil der Schallenergie abgestrahlt werden kann und nicht im piezoelektrischen Element durch innere Reibung oder andere Verlustmechanismen dissipiert werden muss. Eine mechanische Dämpfung des piezoelektrische Elements vernichtet oder zerstreut die Restenergie im Dämpfungsmaterial, so dass das piezoelektrische Element selbst schneller zur Ruhe kommt. Dabei ist zu beachten, dass eine übermäßige mechanische Dämpfung auch die Signalamplitude und die Empfindlichkeit der Schalldetektion negativ beeinflussen kann.

Beim Einsatz in Fahrzeugen, speziell bei der Messung des Ölstands in der Ölwanne eines Verbrennungsmotors, wird meist gefordert, die Blockdistanz und damit den minimal detektierbaren Füllstand möglichst gering zu halten. Dazu ist es notwendig, das Ausklingen des Sende- und Empfangselements zu dämpfen, wobei diese Dämpfung über einen sehr weiten Temperaturbereich funktionieren muss.

Bedingt durch das zum Einsatz gebrachte Impuls-Echoverfahren entstehen, insbesondere bei ungenügender Dämpfung, störende Signale, die aus einer Reflexion an der Rückseite des Ultraschallsensors oder durch eine Schallabstrahlung entgegen der eigentlichen Messrichtung entstehen. Zur Unterdrückung dieser unerwünschten Signale wird die Rückseite der Ultraschallquelle mit einer Dämpfungsmasse versehen. Hierbei kommen beispielsweise Vergussmassen zum Einsatz, die in das Kunststoffgehäuse oder in eine durch das Gehäuse bereitgestellte Vergusswanne eingefüllt werden

Die Elektronik des Ultraschallwandlers, die beispielsweise das piezoelektrische Element und elektronischen Bauteile, wie z. B. eine anwendungsspezifische integrierte Schaltung (ASIC), umfasst, wird nach dem elektrischen Verbinden üblicherweise in einem hohlen Gehäuse angeordnet und dort ortsfest fixiert, beispielsweise mittels eines Klebers. In alternativen Ausgestaltungen ist es bekannt, dass diese Elektronik mittels einer geeigneten Einrichtung anderweitig ortsfest innerhalb des Gehäuses platziert wird, beispielsweise durch Klipsen. In gleicher oder ähnlicher Weise kann auch das bereits oben erwähnte Dämpfungselement im Gehäuse angeordnet und positioniert werden.

Die DE 10 2016 205 240 B3 betrifft ein Verfahren zum Herstellen eines Ultraschallsensors, der dazu ausgebildet ist, den Füllstand und/oder die Temperatur eines Fluids in einer Brennkraftmaschine zu erfassen. Das darin beschriebene Verfahren umfasst ein Bereitstellen einer Elektronik des Ultraschallsensors, ein Anordnen der Elektronik des Ultraschallsensors in einem Spritzgusswerkzeug, und ein Umspritzen der Elektronik mit Kunststoff zum Formen eines Gehäuses für die Elektronik. Das Gehäuse weist zumindest einen Funktionsabschnitt auf, der dazu ausgebildet ist, eine vorbestimmte Funktion zu erfüllen. Der zumindest eine Funktionsabschnitt weist zumindest einen als Vorsprung ausgebildeten Befestigungsbereich, an dem ein Schallführungsrohr befestigbar ist, und/oder eine Dichtungsausnehmung auf, die an einer Außenseite des Gehäuses angeordnet und dazu ausgebildet ist, zumindest eine Dichtung aufzunehmen.

Ferner ist aus der DE 10 2010 014 319 A1 eine Dämpfungsmasse bekannt, die in einem Temperaturintervall von -30 °C bis 150 °C weich und stabil ist. Die daraus bekannte Dämpfungsmasse umfasst ein Epoxidharz und einen Füllstoff, der in einer multimodalen Korngrößenverteilung derart vorliegt, dass ein Dichtegradient der Partikel in der Harzmatrix vorliegt.

Weiteren Stand der Technik bilden die DE 198 09 206 A1, EP 1 902 789 A1, DE 198 09 207 C1, DE 921 70 71 U1, DE 10 2017 221 261 A1 und DE 11 2016 001 207 T5.

Aufgabe der vorliegenden Erfindung ist es, einen hinsichtlich Herstellungskosten und Messqualität verbesserten Ultraschallsensor bereitzustellen, der außerdem bezüglich der Lebensdauer robust ist.

Diese Aufgabe wird mit einem Verfahren zum Herstellen eines Ultraschallsensors gemäß Anspruch 1 und einem Ultraschallsensor gemäß Anspruch 6 gelöst. Bevorzugte Ausgestaltungen sind in den Unteransprüchen angegeben.

Der vorliegenden Erfindung liegt im Wesentlichen der Gedanke zugrunde, neben der Elektronik eines Ultraschallsensors auch die Dämpfungsmasse zum Dämpfen der nicht in die gewünschte Messrichtung ausgesendeten Ultraschallsignale in einem Werkzeug anzuordnen und vollständig in einem Kunststoff derart einzubetten, dass ein Gehäuse für den Ultraschallsensor gebildet wird. Zur Elektronik gehören dabei ein Trägerelement, wie beispielsweise eine Leiterplatte, ein piezoelektrisches Element, das Ultraschallsignale aussenden und empfangen kann, sowie zumindest ein elektronisches Bauteil, das mit dem piezoelektrischen Element elektrisch verbunden ist. Erfindungsgemäß kann somit eine kompakte Einheit gebildet werden, deren Herstellung vereinfacht und kostenoptimiert ist.

Folglich ist gemäß einem ersten Aspekt der vorliegenden Erfindung ein Verfahren zum Herstellen eines Ultraschallsensors offenbart, der dazu ausgebildet ist, den Füllstand und/oder die Qualität eines Fluids zu erfassen. Das erfindungsgemäße Verfahren umfasst ein Bereitstellen eines Trägerelements und ein Anordnen eines piezoelektrischen Elements auf einer ersten Seite des Trägerelements. Das piezoelektrische Element ist dazu ausgebildet, Ultraschallsignale auszusenden und zu empfangen. Das erfindungsgemäße Verfahren umfasst ferner ein Anordnen von zumindest einem elektronischen Bauteil auf dem Trägerelement. Das zumindest eine elektronische Bauteil ist mit dem piezoelektrischen Element elektrisch verbunden. Das erfindungsgemäße Verfahren umfasst ferner ein Anordnen eines Dämpfungselements auf einer der ersten Seite gegenüberliegenden zweiten Seite des Trägerelements, ein Anordnen des Trägerelements, piezoelektrischen Elements, zumindest eines elektronischen Bauteils und Dämpfungselements in einem Werkzeug und ein zumindest teilweises Einbetten des Trägerelements, des piezoelektrischen Elements, des zumindest einen elektronischen Bauteils und des Dämpfungselements in Kunststoff zum Formen eines Gehäuses.

Mit dem erfindungsgemäßen Verfahren zum Herstellen eines Ultraschallsensors ist somit eine Möglichkeit geschaffen, mit der ein Ultraschallsensor auf kompakte, einfache und kostengünstige Weise hergestellt werden kann, der ferner robust ist. Das Einbetten des Trägerelements, des piezoelektrischen Elements, des zumindest einen elektronischen Bauteils und des Dämpfungselements in Kunststoff kann beispielsweise mittels eines Spritzgussverfahrens oder Spritzpressverfahrens erfolgen.

Vorzugsweise handelt es sich bei dem Kunststoff des Gehäuses um einen duroplastischen oder thermoplastischen Kunststoff, der gegenüber dem Fluid beständig ist.

Ferner kann es bevorzugt sein, dass das Trägerelement, das piezoelektrische Element, das zumindest eine elektronische Bauteil und das Dämpfungselement derart im Werkzeug angeordnet werden, dass das Dämpfungselement nach dem Formen des Gehäuses zumindest teilweise aus dem Gehäuse hervorsteht. Dabei ist es besonders vorteilhaft, wenn das Dämpfungselement aus einem Material gebildet ist, das gegenüber dem Fluid beständig ist. In einer solchen bevorzugten Ausgestaltung kann das Dämpfungselement separat und unabhängig vom Trägerelement, an dem das piezoelektrische Element und das zumindest ein elektronisches Bauteil vorab angebracht worden sind, im Werkzeug angeordnet und relativ zum piezoelektrischen Element mittels einer eigenen Haltevorrichtung positioniert und ausgerichtet werden. Insbesondere kann bei einer solchen Ausgestaltung ein separater Schritt des Befestigens des Dämpfungselements am Trägerelement entfallen, was die Herstellung des Ultraschallsensors weiter vereinfachen kann.

In einer weiteren bevorzugten Ausgestaltung des erfindungsgemäßen Verfahrens kann das Dämpfungselement an dem Trägerelement mittels Kleben, Löten oder Klemmen befestigt sein. Dadurch kann eine kompakte Einheit, bestehend aus Trägerelement, piezoelektrischem Element, elektronischem Bauteil und Dämpfungselement, bereitgestellt werden, die im Werkzeug einfach positioniert werden kann. Ein separates Ausrichten bzw. Positionieren anderer Elemente innerhalb des Werkzeugs relativ zu einer solchen Einheit kann entfallen.

In einer alternativen Ausgestaltung des erfindungsgemäßen Verfahrens ist das Dämpfungselement mittels des Schritts des zumindest teilweisen Einbettens relativ zum piezoelektrischen Element positioniert. Wie bereits erwähnt kann das Dämpfungselement dabei unabhängig vom Trägerelement im Werkzeug gehalten und positioniert werden. Dabei kann es bevorzugt sein, dass das Dämpfungselement nach dem Formen des Gehäuses zumindest teilweise aus dem Gehäuse hervorsteht. Insbesondere handelt es sich bei dem aus dem Gehäuse zumindest teilweise hervorstehenden Bereich des Dämpfungselement um denjenigen Bereich, an dem ein Haltewerkzeug das Dämpfungselement während des Einbettungsprozesses innerhalb des Werkzeugs gehalten und relativ zum Trägerelement positioniert hat.

Gemäß einem weiteren Aspekt der vorliegenden Erfindung ist ein Ultraschallsensor zum Erfassen des Füllstands und/oder der Qualität eines Fluids offenbart. Der Ultraschallsensor weist ein Trägerelement und ein piezoelektrisches Element auf, das auf einer ersten Seite des Trägerelements angeordnet ist. Das piezoelektrische Element ist dazu ausgebildet, Ultraschallsignale auszusenden und zu empfangen. Der erfindungsgemäße Ultraschallsensor weist ferner zumindest ein elektronisches Bauteil auf, das auf dem Trägerelement angeordnet und mit dem piezoelektrischen Element elektrisch verbunden ist, ein Dämpfungselement, das auf einer der ersten Seite gegenüberliegenden zweiten Seite des Trägerelements angeordnet ist, und ein Gehäuse auf, in dem das Trägerelement, das piezoelektrische Element, das zumindest eine elektronische Bauteil und das Dämpfungselement zumindest teilweise angeordnet sind. Das Gehäuse ist mittels eines Kunststoffeinbettungsprozesses hergestellt.

Vorzugsweise handelt es sich bei dem Kunststoff um einen duroplastischen oder einen thermoplastischen Kunststoff, der gegenüber dem Fluid beständig ist.

Gemäß einer Ausführungsform des erfindungsgemäßen Ultraschallsensors steht das Dämpfungselement zumindest teilweise aus dem Gehäuse hervor. Insbesondere kann dies die Herstellung des Ultraschallsensors erleichtern, da in einem solchen Fall das Dämpfungselement direkt im Werkzeug eingelegt und in diesem relativ zum Trägerelement, an dem sich das piezoelektrische Element und das zumindest eine elektronische Bauteil angeordnet befinden, positioniert werden kann. Der im fertigen Zustand aus dem Gehäuse hervorstehende Bereich hat dabei als Haltebereich für ein Haltewerkzeug gedient.

In einer weiteren bevorzugten Ausgestaltung des erfindungsgemäßen Verfahrens ist das Dämpfungselement an dem Trägerelement mittels Kleben, Löten oder Klemmen befestigt.

In einer alternativen bevorzugten Ausgestaltung des erfindungsgemäßen Ultraschallsensors ist das Dämpfungselement an dem Gehäuse mittels Formschluss befestigt.

Weitere Merkmale und Aufgaben der Erfindung werden dem Fachmann durch Ausüben der vorliegenden Lehre und Betrachten der beiliegenden Zeichnungen ersichtlich, in denen:
- Fig. 1: eine schematische Schnittansicht einer beispielhaften Ausgestaltung eines erfindungsgemäßen Ultraschallsensors zeigt,
- Fig. 2: eine schematische Schnittansicht einer weiteren beispielhaften Ausgestaltung eines erfindungsgemäßen Ultraschallsensors zeigt, und
- Fig. 3: ein beispielhaftes Ablaufdiagramm eines erfindungsgemäßen Verfahrens zum Herstellen eines erfindungsgemäßen Ultraschallsensors zeigt.

Im Rahmen der vorliegenden Erfindung beschreibt ein "Einbettungsprozess" bzw. ein "Einbetten von Elementen in einem Kunststoff" ein Herstellungsprozess, bei dem die genannten Elemente in einem Werkzeug positioniert und von zunächst formlosen Kunststoff umgeben werden, der während dem Herstellungsprozess diese Elemente teilweise oder vollständig umgibt und deren Außenform im Wesentlichen annimmt, bevor der Kunststoff aushärtet. Beispielsweise kann es sich bei einem erfindungsgemäßen Einbettungsprozess um ein Spritzgießverfahren oder Spritzpressverfahren handeln. Weitere mögliche Einbettungsverfahren sind das Eintauchen in flüssigem Material, auch "Dipping" genannt, wie es beispielsweise für Lacke verwendet wird. Zudem ist ein Vergussprozess in einer offenen oder geschlossenen Form zu nennen, was unter dem Oberbegriff des "Pottings" bekannt ist.

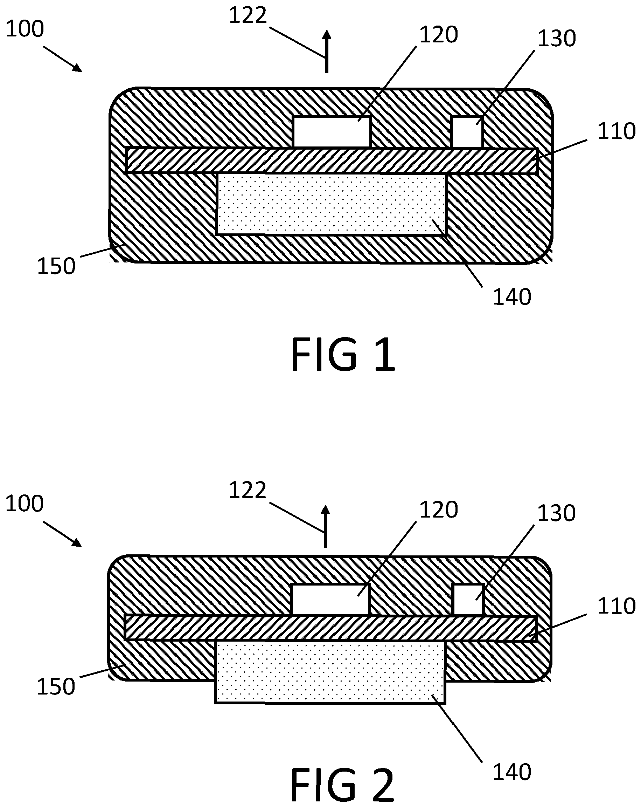

Die Fig. 1 zeigt eine schematische Schnittansicht einer beispielhaften Ausgestaltung eines erfindungsgemäßen Ultraschallsensors 100, der ein Trägerelement 110 aufweist. Das Trägerelement 110 ist vorzugsweise eine Leiterplatte ("printed circuit board", PCB) und ist im Wesentlichen als plattenförmiges Element ausgebildet. Alternativ kann das Trägerelement 110 ein keramisches Substrat sein oder aus Leadframes bestehen. An dem Trägerelement 110 ist auf einer ersten Seite ein piezoelektrisches Element 120 angeordnet und daran befestigt. Das piezoelektrische Element 120 ist dazu ausgebildet, Ultraschallsignale auszusenden und zu empfangen. Der Pfeil 122 in der Fig. 1 zeigt dabei die gewünschte Messrichtung der vom piezoelektrischen Element ausgesandten Ultraschallsignale, beispielsweise in Richtung der Fluidoberfläche zum Erfassen des Füllstands und/oder in Richtung eines sich im Fluid befindlichen Referenzelements zum Ermitteln der Fluidqualität. Das Messprinzip zum Erfassen bzw. Ermitteln des Füllstands und/oder der Qualität des Fluids erfolgt dabei anhand bekannter Methoden, auf die hier nicht näher eingegangen wird.

Zum Steuern und/oder zur Signalauswertung der Signale des Ultraschallsensors 100 ist ferner zumindest ein elektronisches Bauteil 130 vorgesehen, welches sich ebenfalls am Trägerelement 110 angeordnet befindet und daran befestigt ist. **In** der Ausgestaltung der Fig. 1 befindet sich das zumindest eine elektronische Bauteil 130, relativ zum Trägerelement 110, auf der gleichen Seite wie das piezoelektrische Element 120. Es ist aber selbstredend, dass das elektronische Bauteil 130 in alternativen Ausgestaltungen auf der zur ersten Seite gegenüberliegenden zweiten Seite des Trägerelements 110 angeordnet sein kann.

Beim elektronischen Bauteil 130 kann es sich um einen integrierten Schaltkreis, wie beispielsweise einen anwendungsspezifischen elektrischen Schaltkreis (ASIC), handeln. Ferner kann das elektronische Bauteil 130 ein integrierter Schaltkreis, um z. B. eine Kommunikation mit dem piezoelektrischen Element 120 zu ermöglichen, oder ein passives elektronisches Bauteil, wie beispielsweise ein Widerstand oder ein Kondensator, sein.

Der Ultraschallsensor 100 der Fig. 1 weist ferner ein Dämpfungselement 140 auf, das sich auf einer der ersten Seite gegenüberliegenden zweiten Seite des Trägerelements 110 angeordnet befindet. Das Dämpfungselement 140 ist insbesondere dazu ausgebildet, die entgegen der Messrichtung 122 ausgesandten Ultraschallsignale derart zu dämpfen, dass hiervon keine Echosignale zu erwarten sind, die störend für die genaue Erfassung bzw. Ermittlung des Füllstands und/oder Qualität des Fluids sein können. Das Dämpfungselement 140 ist beispielsweise aus einem geschlossenporigen Schaum gebildet, der flexibel oder starr sein kann. Beispielsweise kann es sich um einen Metallschaum, einen porösen oder aufgeschäumten Kunststoff oder um aufgeschäumtes Glas handeln. Ferner kann es sich bei dem Dämpfungselement 140 um einen offenporigen Schaum, der mit einer geschlossenen Oberfläche versehen wurde, um ein gummiartiges Material, wie beispielsweise einem typischen Dichtungsmaterial, wie z. B. EPDM, oder um ein Material mit sehr geringer Dichte handeln. Vorzugsweise handelt es sich bei dem Material des Dämpfungselements 140 um ein Material mit einer hohen Schalldämpfung und einer akustischen Impedanz, die sich deutlich von der akustischen Impedanz des Gehäuses 150 (siehe unten) unterscheidet.

Das Dämpfungselement 140 kann dabei auf der zweiten Seite des Trägerelements 110 mittels Kleben, Löten oder Klemmen befestigt sein. Alternativ kann das Dämpfungselement 140 derart positioniert sein, dass es in Kontakt mit dem Trägerelement 110 ist, jedoch nicht an diesem befestigt bzw. mit diesem fest verbunden ist.

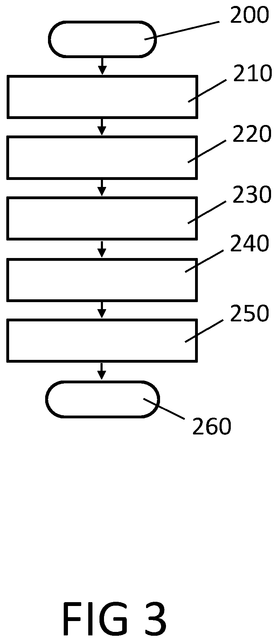

Der erfindungsgemäße Ultraschallsensor 100 der Fig. 1 weist ferner ein Gehäuse 150 auf, in dem sich das Trägerelement 110, das piezoelektrische Element 120, das zumindest eine elektronische Bauteil 130 sowie das Dämpfungselement 140 zumindest teilweise angeordnet befindet. Erfindungsgemäß handelt es sich bei dem Gehäuse 150 um einen Kunststoffkörper, der durch eine direkte Einbettung der Elemente 110, 120, 130 und 140 in ein geeignetes Material hergestellt wird. Bevorzugt ist das Gehäuse 150 ein mittels eines Spritzgussverfahrens hergestelltes Gehäuse 150, das mittels eines Umspritzens der darin befindlichen Elemente mit Kunststoff hergestellt worden ist. Ein entsprechendes Verfahren wird weiter unten mit Bezug auf die Fig. 3 näher beschrieben.

Die in der Fig. 1 gezeigte vorteilhafte Ausgestaltung des erfindungsgemäßen Ultraschallsensors 100 zeigt, dass das Dämpfungselement 140 vollständig im Gehäuse 150 angeordnet bzw. eingebettet ist. Dies kann insbesondere dann von Vorteil sein, wenn das Dämpfungselement 140 aus einem Material gebildet ist, welches gegenüber dem Fluid nicht beständig ist. Dabei bilden das Trägerelement 110, das piezoelektrische Element 120, das zumindest eine elektronische Bauteil 130 und das Dämpfungselement 140 eine Einheit.

Die Fig. 2 zeigt eine weitere beispielhafte Ausgestaltung eines erfindungsgemäßen Ultraschallsensors 100, der sich von dem Ultraschallsensor 100 der Fig. 1 darin unterscheidet, dass das Dämpfungselement 140 nicht vollständig im Gehäuse 150 eingebettet ist, sondern zumindest teilweise aus diesem hervorsteht. Dies ist insbesondere dann möglich, wenn das Dämpfungselement 140 aus einem Material gebildet ist, das gegenüber dem Fluid beständig ist. Insbesondere kann dies bei einem erfindungsgemäßen Verfahren zum Herstellen des erfindungsgemäßen Ultraschallsensors 100 (siehe Beschreibung zur Fig. 3 unten) vorteilhaft sein, wenn das Dämpfungselement 140 zunächst im Werkzeug separat angeordnet und positioniert werden kann und erst danach die Einheit bestehend aus Trägerelement 110, piezoelektrischem Element 120 und elektronischem Bauteil 130 im Werkzeug angeordnet wird. Das Dämpfungselement 140 kann dabei von einem separaten Haltewerkzeug innerhalb des Werkzeugs gehalten und relativ zum piezoelektrischen Element 120 ausgerichtet werden. Der Haltebereich des Dämpfungselements 140, an dem das Haltewerkzeug das Dämpfungselement 140 innerhalb dem Werkzeug hält, ist derjenige Bereich, der nach dem Einbettungsprozess zum Formen des Gehäuses 150 aus dem Gehäuse 150 hervorsteht.

Unter Verweis auf die Fig. 3 ist ein erfindungsgemäßes Verfahren zum Herstellen eines erfindungsgemäßen Ultraschallsensors 100 (siehe Fig. 1 und 2) gezeigt.

Das Verfahren der Fig. 3 startet beim Schritt 200 und gelangt dann zum Schritt 210, an dem ein Trägerelement 110, vorzugsweise eine Leiterplatte, bereitgestellt wird. In einem darauffolgenden Schritt 220 wird das piezoelektrische Element 120 auf dem Trägerelement 110 auf einer ersten Seite angeordnet und daran befestigt. Beispielsweise wird das piezoelektrische Element 120 auf dem Trägerelement 110 mittels Löten befestigt und mit dem auf dem Trägerelement 110 bereitgestellten Leiterbahnen (in den Zeichnungen nicht explizit dargestellt) elektrisch verbunden.

In einem darauffolgenden Schritt 230 wird das elektronische Bauteil 130 auf dem Trägerelement 110 angeordnet und ebenfalls mit den sich darauf befindlichen Leiterbahnen derart elektrisch verbunden, dass eine elektrische Verbindung zwischen dem piezoelektrischen Element 120 und dem elektronischen Bauteil 130 hergestellt ist.

In einem darauffolgenden Schritt 240 wird das Dämpfungselement 140 an einer der ersten Seite gegenüberliegenden zweiten Seite des Trägerelements 110 angeordnet und mit dem Trägerelement 110 verbunden bzw. daran befestigt. Dies kann beispielsweise mittels Kleben, Löten oder Klemmen geschehen.

In einem darauffolgenden Schritt 250 wird die Einheit bestehend aus Trägerelement 110, piezoelektrischem Element 120, elektronischem Bauteil 130 und Dämpfungselement 140 in einem Werkzeug, beispielsweise Spritzgusswerkzeug oder Spritzpresswerkzeug, positioniert und mittels eines Einbettungsprozesses in Kunststoff derart eingebettet, dass das Gehäuse 150 gebildet wird. Das Verfahren endet dann beim Schritt 260.

Alternativ zum Schritt 240 kann es bevorzugt sein, das Dämpfungselement 140 separat und unabhängig von der vormontierten Einheit bestehend aus Trägerelement 110, piezoelektrischem Element 120 und elektronischem Bauteil 130 im Werkzeug zu positionieren und erst dann im Kunststoff einzubetten. Dabei kann es ferner bevorzugt sein, dass das Dämpfungselement 140 aus dem Gehäuse 150 vorsteht. Der hervorstehende Bereich des Dämpfungselements 140 kann dabei als Haltebereich für das Werkzeug genutzt werden, wodurch die exakte Ausrichtung des Dämpfungselements 140 relativ zum piezoelektrischen Element 120 verbessert werden kann.

## Patentansprüche

1. Verfahren zum Herstellen eines Ultraschallsensors (100), der dazu ausgebildet ist, den Füllstand und/oder die Qualität eines Fluids zu erfassen, wobei das Verfahren aufweist:
- Bereitstellen eines Trägerelements (110),
- Anordnen eines piezoelektrischen Elements (120) auf einer ersten Seite des Trägerelements (110), wobei das piezoelektrische Element (120) dazu ausgebildet ist, Ultraschallsignale auszusenden und zu empfangen,
- Anordnen von zumindest einem elektronischen Bauteil (130) auf dem Trägerelement (110), wobei das zumindest eine elektronische Bauteil (130) mit dem piezoelektrischen Element (120) elektrisch verbunden ist,
- Anordnen eines Dämpfungselements (140) auf einer der ersten Seite gegenüberliegenden zweiten Seite des Trägerelements (110),
- Anordnen des Trägerelements (110), piezoelektrischen Elements (120), zumindest einen elektronischen Bauteils (130) und des Dämpfungselements (140) in einem Werkzeug, und
- zumindest teilweises Einbetten des Trägerelements (110), des piezoelektrischen Elements (120), des zumindest einen elektronischen Bauteils (130) und des Dämpfungselements (140) in Kunststoff zum Formen eines Gehäuses (150).

2. Verfahren nach Anspruch 1, wobei der Kunststoff ein duroplastischer oder ein thermoplastischer Kunststoff ist, der gegenüber dem Fluid beständig ist.

3. Verfahren nach einem der vorhergehenden Ansprüche, wobei das Trägerelement (110), das piezoelektrische Element (120), das zumindest eine elektronische Bauteil (130) und das Dämpfungselement (140) derart im Werkzeug angeordnet werden, dass das Dämpfungselement (140) nach dem Formen des Gehäuses (150) zumindest teilweise aus dem Gehäuse (150) hervorsteht.

4. Verfahren nach einem der vorhergehenden Ansprüche, wobei das Dämpfungselement (150) an dem Trägerelement (110) mittels Kleben oder Löten befestigt ist.

5. Verfahren nach einem der Ansprüche 1 bis 3, wobei das Dämpfungselement (140) mittels des Schritts des zumindest teilweise Einbettens relativ zum piezoelektrischen Element (120) positioniert wird.

6. Ultraschallsensor (100) zum Erfassen des Füllstands und/oder der Qualität eines Fluides, wobei der Ultraschallsensor (100) aufweist:
- ein Trägerelement (110),
- ein piezoelektrisches Element (120), das auf einer ersten Seite des Trägerelements (110) angeordnet ist, wobei das piezoelektrische Element (120) dazu ausgebildet ist, Ultraschallsignale auszusenden und zu empfangen,
- zumindest ein elektronisches Bauteil (130), das auf dem Trägerelement (110) angeordnet ist, wobei das zumindest eine elektronische Bauteil (130) mit dem piezoelektrischen Element (120) elektrisch verbunden ist,
- ein Dämpfungselement (140), das auf einer der ersten Seite gegenüberliegenden zweiten Seite des Trägerelements (110) angeordnet ist, und
- ein Gehäuse (150), in dem das Trägerelement (110), das piezoelektrische Element (120), das zumindest eine elektronische Bauteil (130) und das Dämpfungselement (150) zumindest teilweise angeordnet sind, wobei das Gehäuse (150) mittels eines Kunststoffeinbettungsprozesses hergestellt ist.

7. Ultraschallsensor (100) nach Anspruch 6, wobei der Kunststoff ein duroplastischer oder ein thermoplastischer Kunststoff ist, der gegenüber dem Fluid beständig ist.

8. Ultraschallsensor (100) nach einem der Ansprüche 6 und 7, wobei das Dämpfungselement (140) zumindest teilweise aus dem Gehäuse (150) hervorsteht.

9. Ultraschallsensor (100) nach einem der Ansprüche 6 bis 8, wobei das Dämpfungselement (140) an dem Trägerelement (110) mittels Kleben oder Löten befestigt ist

10. Ultraschallsensor (100) nach einem der Ansprüche 6 bis 8, wobei das Dämpfungselement (140) an dem Gehäuse (150) mittels Formschluss befestigt ist.

## Claims

1. Method for producing an ultrasonic sensor (100) which is designed to detect the filling level and/or the quality of a fluid, the method comprising:
- providing a carrier element (110);
- arranging a piezoelectric element (120) on a first side of the carrier element (110), the piezoelectric element (120) being designed to emit and receive ultrasonic signals,
- arranging at least one electronic component (130) on the carrier element (110), the at least one electronic component (130) being electrically connected to the piezoelectric element (120),
- arranging a damping element (140) on a second side of the carrier element (110) opposite from the first side,
- arranging the carrier element (110), the piezoelectric element (120), the at least one electronic component (130) and the damping element (140) in a mould, and
- at least partially embedding the carrier element (110), the piezoelectric element (120), the at least one electronic component (130) and the damping element (140) in plastic for forming a housing (150).

2. Method according to Claim 1, the plastic being a thermosetting or thermoplastic material which is resistant to the fluid.

3. Method according to one of the preceding claims, the carrier element (110), the piezoelectric element (120), the at least one electronic component (130) and the damping element (140) being arranged in the mould in such a way that, after the housing (150) has been formed, the damping element (140) at least partially protrudes from the housing (150).

4. Method according to one of the preceding claims, the damping element (150) being fastened to the carrier element (110) by means of adhesive bonding or soldering.

5. Method according to one of Claims 1 to 3, the damping element (140) being positioned relative to the piezoelectric element (120) by means of the step of at least partial embedding.

6. Ultrasonic sensor (100) for detecting the filling level and/or the quality of a fluid, the ultrasonic sensor (100) comprising:
- a carrier element (110);
- a piezoelectric element (120), which is arranged on a first side of the carrier element (110), the piezoelectric element (120) being designed to emit and receive ultrasonic signals,
- at least one electronic component (130), which is arranged on the carrier element (110), the at least one electronic component (130) being electrically connected to the piezoelectric element (120),
- a damping element (140), which is arranged on a second side of the carrier element (110) opposite from the first side, and
- a housing (150), in which the carrier element (110), the piezoelectric element (120), the at least one electronic component (130) and the damping element (150) are at least partially arranged, the housing (150) being produced by means of a plastics embedding process.

7. Ultrasonic sensor (100) according to Claim 6, the plastic being a thermosetting or thermoplastic material which is resistant to the fluid.

8. Ultrasonic sensor (100) according to one of Claims 6 and 7, the damping element (140) at least partially protruding from the housing (150).

9. Ultrasonic sensor (100) according to one of Claims 6 to 8, the damping element (140) being fastened to the carrier element (110) by means of adhesive bonding or soldering

10. Ultrasonic sensor (100) according to one of Claims 6 to 8, the damping element (140) being fastened to the housing (150) by means of a form fit.

## Revendications

1. Procédé de fabrication d'un capteur à ultrasons (100) qui est conçu pour détecter le niveau de remplissage et/ou la qualité d'un fluide, le procédé comprenant les étapes consistant à :
- fournir un élément de support (110),
- agencer un élément piézoélectrique (120) sur un premier côté de l'élément de support (110), l'élément piézoélectrique (120) étant conçu pour émettre et recevoir des signaux ultrasonores,
- agencer au moins un composant électronique (130) sur l'élément de support (110), l'au moins un composant électronique (130) étant relié électriquement à l'élément piézoélectrique (120),
- agencer un élément d'amortissement (140) sur un deuxième côté de l'élément de support (110) opposé au premier côté,
- agencer l'élément de support (110), l'élément piézoélectrique (120), au moins un composant électronique (130) et l'élément d'amortissement (140) dans un outil, et
- enrober au moins partiellement l'élément de support (110), l'élément piézoélectrique (120), l'au moins un composant électronique (130) et l'élément d'amortissement (140) dans de la matière plastique pour former un boîtier (150).

2. Procédé selon la revendication 1, dans lequel la matière plastique est une matière plastique thermodurcissable ou thermoplastique qui est résistante au fluide.

3. Procédé selon l'une quelconque des revendications précédentes, dans lequel l'élément de support (110), l'élément piézoélectrique (120), l'au moins un composant électronique (130) et l'élément d'amortissement (140) sont agencés dans l'outil de telle sorte que l'élément d'amortissement (140), après le moulage du boîtier (150), dépasse au moins partiellement du boîtier (150).

4. Procédé selon l'une quelconque des revendications précédentes, dans lequel l'élément d'amortissement (150) est fixé à l'élément de support (110) par collage ou brasage.

5. Procédé selon l'une quelconque des revendications 1 à 3, dans lequel l'élément d'amortissement (140) est positionné par rapport à l'élément piézoélectrique (120) au moyen de l'étape d'enrobage au moins partiel.

6. Capteur à ultrasons (100) destiné à détecter le niveau de remplissage et/ou la qualité d'un fluide, le capteur à ultrasons (100) comportant :
- un élément de support (110),
- un élément piézoélectrique (120) qui est agencé sur un premier côté de l'élément de support (110), l'élément piézoélectrique (120) étant conçu pour émettre et recevoir des signaux ultrasonores,
- au moins un composant électronique (130) qui est agencé sur l'élément de support (110), l'au moins un composant électronique (130) étant relié électriquement à l'élément piézoélectrique (120),
- un élément d'amortissement (140) qui est agencé sur un deuxième côté de l'élément de support (110) opposé au premier côté, et
- un boîtier (150) dans lequel l'élément de support (110), l'élément piézoélectrique (120), l'au moins un composant électronique (130) et l'élément d'amortissement (150) sont au moins partiellement agencés, le boîtier (150) étant fabriqué par un processus d'enrobage dans de la matière plastique.

7. Capteur à ultrasons (100) selon la revendication 6, dans lequel la matière plastique est une matière plastique thermodurcissable ou une matière plastique thermoplastique qui est résistante au fluide.

8. Capteur à ultrasons (100) selon l'une quelconque des revendications 6 ou 7, dans lequel l'élément d'amortissement (140) dépasse au moins partiellement du boîtier (150).

9. Capteur à ultrasons (100) selon l'une quelconque des revendications 6 à 8, dans lequel l'élément d'amortissement (140) est fixé à l'élément de support (110) par collage ou brasage.

10. Capteur à ultrasons (100) selon l'une quelconque des revendications 6 à 8, dans lequel l'élément d'amortissement (140) est fixé au boîtier (150) par complémentarité de forme.
